Europäisches Patentamt

European Patent Office

Office européen des brevets

(11) Numéro de publication: **0 019 522**
**A1**

## (12) DEMANDE DE BREVET EUROPEEN

(21) Numéro de dépôt: 80400622.9

(22) Date de dépôt: 08.05.80

(51) Int. Cl.³: **F 16 D 15/00**
**F 16 D 7/06**

(30) Priorité: **11.05.79 FR 7911990**

(43) Date de publication de la demande:
**26.11.80 Bulletin 80/24**

(84) Etats Contractants Désignés:
**BE CH DE GB IT LI NL SE**

(71) Demandeur: "THOMSON-CSF"- SCPI
**173, Boulevard Haussmann**
**F-75360 Paris Cedex 08(FR)**

(72) Inventeur: **Pozzo, Claude**
**"THOMSON-CSF"SCPI F-173,Bld Haussmann**
**F-75360 Paris Cedex 08(FR)**

(74) Mandataire: **Eisenbeth, Jacques Pierre et al,**
**"THOMSON-CSF" - SCPI 173, bld Haussmann**
**F-75360 Paris Cedex 08(FR)**

(54) Accouplement débrayable et son application au fonctionnement d'une vanne.

(57) Accouplement débrayable comprenant deux manchons (1 et 2) d'axe longitudinal (Δ), dans lesquels sont fixés les arbres de deux pièces à accoupler, emboitables l'un dans l'autre par un système d'au moins trois billes (23, 24 et 25) guidées, placées à 120° l'une de l'autre et se déplaçant perpendiculairement à l'axe (Δ), leur distance par rapport à l'axe (Δ) dépendant d'un pointeau (14) coulissant le long de l'axe (Δ) sous l'action d'une commande automatique ou manuelle.

EP 0 019 522 A1

./...

FIG_1

0019522

1

## ACCOUPLEMENT DEBRAYABLE ET SON APPLICATION AU FONCTIONNEMENT D'UNE VANNE

L'invention concerne un accouplement débrayable permettant à volonté d'établir progressivement ou de rompre la liaison entre deux parties successives d'une transmission de mouvement.

Par embrayage, on entend l'organe effectuant le couplage de deux arbres, dont l'un au moins est en rotation, au terme de laquelle le mouvement de ces deux arbres est amené au synchronisme. Les deux pièces dont l'une au moins affecte la forme d'un solide de révolution, peuvent être amenées en contact sous un effort de serrage. Le frottement de glissement qui en résulte produit sur chacun des arbres un couple tendant à accélérer celui dont la vitesse est initialement la plus faible, donc jouant pour lui le rôle du couple moteur, et à s'opposer au mouvement de l'autre, pour lequel il agit en couple résistant.

L'accouplement débrayable suivant l'invention a plus particulièrement pour but de relier une vanne de mélange à un servomoteur par l'intermédiaire d'un réducteur, mais pouvant également être manoeuvrée manuellement. La vitesse en sortie du réducteur est très faible, 3 tr/heure dans un exemple de réalisation non limitatif ne posant pas de problèmes d'usure des matériaux très importants.

Suivant un exemple de réalisation antérieur un manchon dans lequel se fixe l'arbre du réducteur comprend une poignée qui est enclenchée dans une autre poignée solidaire du manchon dans lequel est emboitée la pièce à mettre en rotation, en particulier une vanne

2

par l'intermédiaire d'un ressort par exemple. Pour débrayer manuellement le système, il faut désenclencher le ressort pour désolidariser les deux poignées. Un inconvénient d'un tel système est que la manoeuvre n'est pas évidente de telle sorte que l'on peut casser une des deux poignées ou le moteur si l'on force sur l'autre poignée. D'autre part, lorsque la vanne se bloque pour une raison quelconque, le système ne se désacouple pas automatiquement, pouvant alors faire griller le moteur.

La présente invention permet de remédier à ces inconvénients et a pour objet un accouplement débrayable par une commande automatique ou manuelle pour l'entraînement d'une vanne.

Selon une caractéristique de l'invention, l'accouplement débrayable comprend deux manchons, dans lesquels sont fixés les arbres de deux pièces à accoupler, tels qu'ils sont emboitables l'un dans l'autre par un système d'au moins trois billes guidées placées à 120° les unes des autres, se déplaçant perpendiculairement à l'axe de rotation ($\Delta$) des deux arbres, sous l'action d'une commande automatique ou manuelle.

Un des avantages de l'invention est la sécurité du dispositif qui débraye automatiquement lorsque la vanne est bloquée, évitant ainsi de griller le moteur.

Un autre avantage de l'invention est que l'on ne peut pas manoeuvrer la pièce à mouvoir, la vanne par exemple, sans débrayer le système, évitant ainsi de casser le moteur.

D'autres caractéristiques et avantages de l'invention apparaîtront dans la description qui suit, illustrée par les figures suivantes.

3

— la figure 1, une coupe longitudinale, d'un accouplement débrayable selon l'invention, en position embrayée,

— la figure 2, une coupe transversale de l'accouplement débrayable selon l'invention,

— la figure 3, une coupe longitudinale de l'invention en position débrayée.

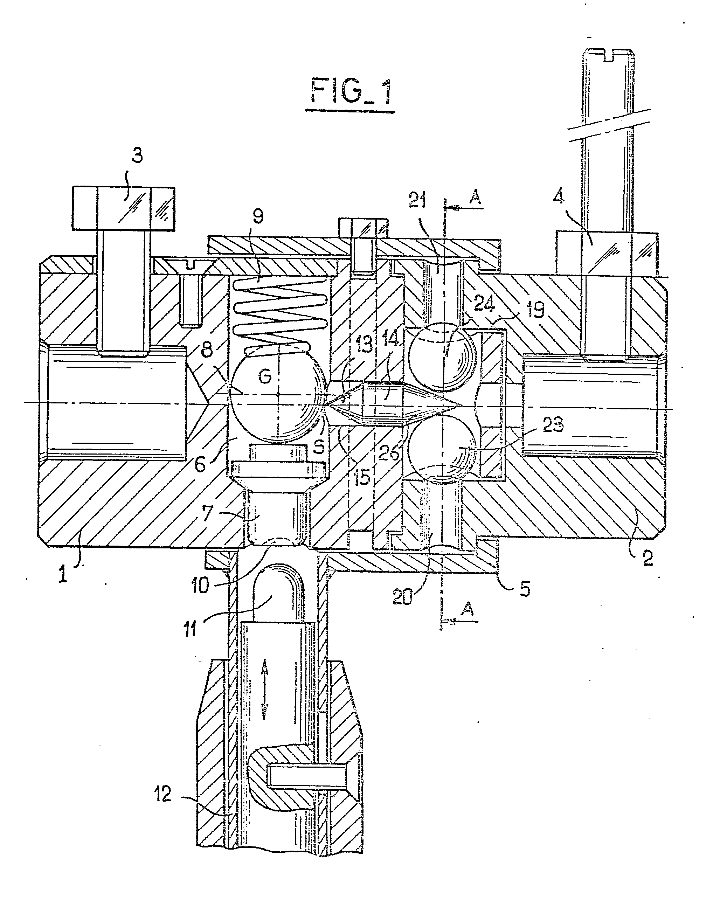

La figure 1 représente un accouplement débrayable selon l'invention. Il est constitué de deux manchons 1 et 2 cylindriques dans lesquels sont fixés les arbres des deux pièces à accoupler, au moyen des vis 3 et 4. Un boitier cylindrique 5 permet de maintenir assemblés les deux manchons 1 et 2.

Le papillon de la vanne ne pouvant tourner que de 90° autour de son axe, le moteur donc le réducteur ne doivent pas faire un tour complet. Une butée mécanique doit limiter la rotation du manchon 2, solidaire de l'arbre du réducteur. Cette butée peut être constituée par une tige d'acier, enfoncée dans la vis 4, cette tige butant contre deux barres métalliques placées parallèlement à l'axe de rotation du dispositif, et n'étant pas représentées sur la figure. Cette butée mécanique évite de placer des contacts électriques de fin de courses sur le moteur, ces contacts électriques étant beaucoup plus fragiles que la butée mécanique. Pour éviter que le moteur ne s'échauffe et grille lorsque la tige est en butée, le moteur est sous-volté. Le manchon 1 comporte une cavité cylindrique 6 transversale de diamètre rétréci à l'une de ses extrémités, extrémité dans laquelle se trouve un poussoir 7 dont la forme est adaptée au rétrécissement. Dans la cavité 6 peut se déplacer une bille 8 de diamètre très

4

voisin de celui de la cavité, cette bille 8 étant coincée entre le poussoir 7 et un ressort 9 fixé à l'extrémité de la cavité 6 opposée au poussoir 7. L'extrémité du poussoir 7 opposée à la bille 8 présente un creux sphérique 10 adapté à l'arrondi d'une tige 11 placée perpendiculairement à l'axe $\Delta$ longitudinal de rotation du système.

Cette tige (11) coulisse dans un tube (12) solidaire du boitier 5. La position de la bille 8 lorsque le système est embrayé est telle que son centre de gravité G est placé sensiblement au dessus de l'axe ($\Delta$).

La bille 8 est en contact avec le sommet S d'une des extrémités conique 13 d'un pointeau cylindrique 14, de même axe longitudinal $\Delta$ que l'ensemble. Le pointeau 14 est logé dans une cavité cylindrique 15 de diamètre légèrement supérieur au sien, et l'axe $\Delta$. A l'extrémité de cette cavité 15 sont réalisés trois logements cylindriques 16, 17 et 18 à 120° les uns des autres.

Ces trois logements s'emboitent dans le manchon 2, à l'intérieur d'une cavité cylindrique 19 présentant trois trous eux-mêmes cylindriques 20, 21 et 22. Trois billes 23, 24 et 25 sont placés dans les logements 16, 17 et 18, leur diamètre étant sensiblement égal à celui des logements, mais légèrement supérieur au diamètre des trous 20, 21 et 22. Leur écartement est fonction de la deuxième extrémité conique 26 du pointeau 14, qui peut se déplacer le long de l'axe $\Delta$, avec laquelle elles sont en contact. Une graisse consistante recouvre les trois billes.

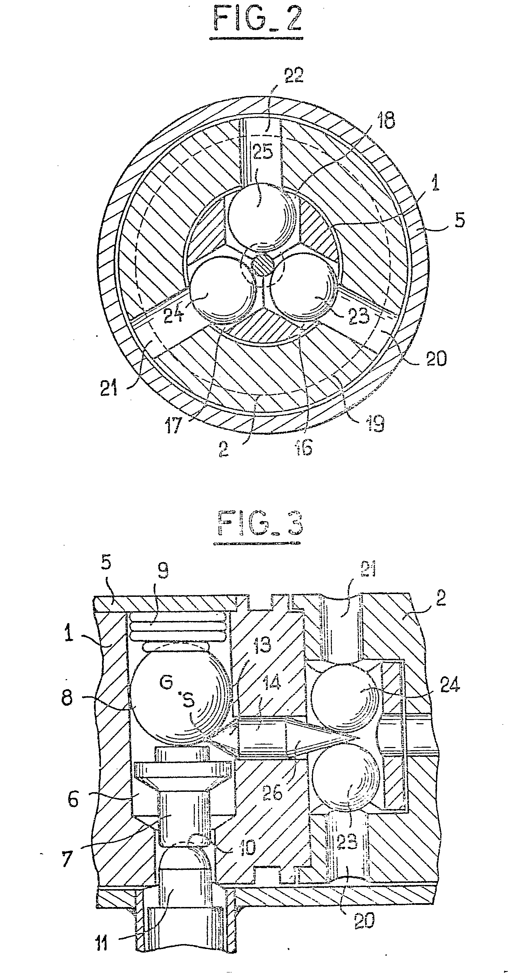

En position embrayée, la tige 11 n'est pas en contact avec le poussoir (7) sur lequel s'appuie la

5

bille 8 sous l'effet du ressort 9. Le pointeau 14 touche la bille 8 en un point de contact S placé légèrement au dessous du centre de gravité G. L'autre extrémité du pointeau 14 écarte au maximum les billes 23, 24 et 25, comme le montre la figure 2 de telle sorte que le manchon 1 tournant sous l'action d'un moteur par l'intermédiaire d'un réducteur entraîne le manchon 2 puisque les billes s'emboitent légèrement dans les trous 20, 21 et 22.

La figure 3 montre une coupe longitudinale de l'accouplement en position débrayée. La tige 11 a été poussée manuellement dans le creux 10 du poussoir 7, qui en se déplaçant comprime alors le ressort 9. Le centre de gravité G de la bille 8 monte et le pointeau 14 peut alors se déplacer longitudinalement vers l'extrémité de la bille en contact avec le poussoir 7. De ce fait, l'extrémité conique 26 du pointeau 14 se déplace dégageant les 3 billes (23, 24,25) qui tendent à se rapprocher les unes des autres et les billes quittent les trous (20, 21 et 22) de la cavité.cylindrique 19. Si le manchon 1 tourne sous l'effet du moteur, le manchon 2 n'est plus entraîné par les billes et le système est débrayé.

L'accouplement selon l'invention peut débrayer automatiquement si le manchon 2, dans lequel est fixé la vanne, se bloque pour une raison quelconque. Dans ce cas, les trois billes 23, 24 et 25 qui tournent en même temps que le manchon 1 se heurtent aux bords des trous 20, 21 et 22 immobilisés de telle sorte que la composante radiale de la force agissant sur les billes les fait se rapprocher de l'axe $\Delta$ poussant ainsi le pointeau 14 dont le sommet S de l'extrémité 13 glisse

6

sous le centre de gravité G de la bille 8 faisant remonter cette bille 8. Pour des raisons de résistance à l'effort, les billes 23, 24 et 25 sont en acier dur et le pointeau 14 est en acier trempé très dur ne s'usant pas aux frottements des billes. L'extrémité 13 est un peu arrondie pour éviter que la pointe ne se casse lorsqu'elle cogne contre la bille 8 en acier dur.

On a ainsi décrit un accouplement débrayable dont la principale application est l'ouverture ou la fermeture d'une vanne de mélange, pour chauffage individuel.

7

REVENDICATIONS

1. Accouplement débrayable comprenant deux manchons dans lesquels sont fixés les arbres de deux pièces à accoupler maintenues solidaires par un boitier cylindrique, caractérisé en ce que les deux manchons (1 et 2) sont emboîtables l'un dans l'autre par un système d'au moins trois billes guidées (23, 24 et 25), placées à 120° les unes des autres, se déplaçant perpendiculairement à l'axe de rotation ($\Delta$) des deux manchons (1 et 2), la distance de leurs centres respectifs par rapport à l'axe ($\Delta$) dépendant de la position d'une des extrémités coniques (26) d'un pointeau (14) coulissant le long de l'axe de rotation ($\Delta$), l'autre extrémité conique (13) du pointeau (14) étant en contact avec une bille (8) se déplaçant dans une cavité cylindrique (6) transversale entre deux positions extrêmes déterminées par un ressort (9) appuyant la bille mobile (8) contre un poussoir (7), le déplacement longitudinal du pointeau (14) se faisant sous l'action d'une commande automatique ou manuelle.

2. Accouplement débrayable selon la revendication 1, caractérisé en ce qu'un des manchons (1) comporte une cavité cylindrique transversale (6) de diamètre rétréci à l'une de ses extrémités, cavité à l'intérieur de laquelle se déplace la bille (8), dont le diamètre est voisin de celui de la cavité, et qui est placée entre le ressort (9) et le poussoir (7) dont la forme est adaptée à l'extrémité rétrécie de la cavité.

3. Accouplement débrayable selon la revendication 2, caractérisé en ce que le centre de gravité G de la

8

bille est situé au dessus de l'axe (Δ) par rapport au poussoir (7).

4. Accouplement débrayable selon la revendication 3, caractérisé en ce que l'extrémité du poussoir (7) opposée à la bille (8) présente un creux sphérique (10) adapté à l'extrémité arrondie d'une tige .(11) mobile pouvant entraîner le déplacement du poussoir (7) suivant un axe perpendiculaire à l'axe ( Δ ).

5. Accouplement débrayable selon la revendication 4, caractérisé en ce que le pointeau (14) coulissable est cylindrique comportant deux extrémités coniques (13 et 26) dont l'une (26) règle l'écartement des trois billes (23, 24 et 25) et dont l'autre (13) présente un point de contact S avec la bille (8), le point S étant placé en dessous du centre de gravité G de la bille (8).

6. Accouplement débrayable selon la revendication 5, caractérisé en ce que le pointeau (14) est logé dans une cavité cylindrique (15) de diamètre voisin du sien.

7. Accouplement débrayable selon la revendication 6, caractérisé en ce que les trois billes (23 24 et 25) sont placées dans trois logements (16, 17, 18) disposés à 120° les uns des autres à l'extrémité du manchon (1) ces trois logements s'emboitant dans une cavité cylindrique (19) du manchon (2), cette cavité (19) présentant trois trous cylindriques (20, 21 et 22) de diamètre inférieur à celui des billes, placés à 120° les uns des autres.

8. Accouplement débrayable selon la revendication 4, caractérisé en ce que la tige (11) est placée dans un tube (12) solidaire du boitier (5).

9. Accouplement débrayable selon la revendication 5, caractérisé en ce que l'extrémité conique (13) du pointeau 14 est arrondie.

10. Accouplement débrayable selon l'une des revendications 1 à 8 caractérisé en ce qu'il permet d'accoupler un moteur et une vanne de chauffage central.

FIG_1

## FIG_2

## FIG_3

0019522

**Office européen des brevets**

**RAPPORT DE RECHERCHE EUROPEENNE**

Numéro de la demande

EP 80 40 0622

| | **DOCUMENTS CONSIDERES COMME PERTINENTS** | | | **CLASSEMENT DE LA DEMANDE (Int. Cl. ³)** |
|---|---|---|---|---|
| Catégorie | Citation du document avec indication, en cas de besoin, des parties pertinentes | Revendication concernée | | |
| | FR - A - 1 366 025 (VASSILIEFF)<br>* Page 3, colonne de gauche; figures 5,6,7 *<br><br>-- | 1,6 | | F 16 D 15/00<br>7/06 |
| | DE - B - 1 057 834 (VEB FALZ)<br>* Colonne 2, ligne 42 - colonne 3, figures *<br><br>-- | 1,6 | | |
| | US - A - 3 693 381 (McGEE)<br>* Résumé; figures 1,2 *<br><br>-- | 1,7 | | **DOMAINES TECHNIQUES RECHERCHES (Int. Cl. ³)** |
| | GB - A - 1 392 098 (RINGSPANN)<br>* Page 2, figures 2,3 *<br><br>-- | 1,7 | | F 16 D<br>F 24 H |
| A | FR - A - 1 004 826 (HOUPLAIN) | | | |
| A | DE - A - 2 351 228 (DAIMLER) | | | |
| A | GB - A - 893 932 (BAKER) | | | |
| A | US - A - 3 827 260 (KATO)<br><br>---- | | | |

**CATEGORIE DES DOCUMENTS CITES**

X: particulièrement pertinent
A: arrière-plan technologique
O: divulgation non-ecrite
P: document intercalaire
T: théorie ou principe a la base de l'invention
E: demande faisant interference
D: document cite dans la demande
L: document cite pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 08-08-1980 | ORTHLIEB |

OEB Form 1503.1   06.78